(19) Europäisches Patentamt
European Patent Office
Office européen des brevets

(11) EP 1 323 795 A1

(12) **EUROPEAN PATENT APPLICATION**

(43) Date of publication:
**02.07.2003 Bulletin 2003/27**

(51) Int Cl.[7]: **C09D 11/10**, C08F 222/10

(21) Application number: **01130747.7**

(22) Date of filing: **20.12.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **UCB S.A.**
**1070 Bruxelles (BE)**

(72) Inventors:
- **Bergiers, Francis**
  **1310 La Hulpe (BE)**
- **Bhattacharya, Indrajit**
  **Andheri East, 400 093 Mumbai (IN)**
- **Lindekens, Luc**
  **1785 Merchtem (BE)**
- **Van den Branden, Stefan**
  **2550 Kontich (BE)**

(54) **Radiation curable compositions for pigmented liquid inks**

(57) The invention concerns radiation curable liquid pigmented ink composition, wherein ticyclodecyl di(meth)acrylate and/or tricyclodecyl mono(meth)acrylate are particularly good wetting agent. The compositions are used in ink jet inks, gravure inks and flexographic inks.

EP 1 323 795 A1

## Description

The invention relates to radiation curable compositions containing essentially tricyclodecyl di(meth)acrylate or tricyclodecyl mono(meth)acrylate, used as pigmented liquid inks. Liquid inks comprise flexographic inks, gravure inks and more particularly ink jet inks.

In ink jet printing, small drops of ink are projected directly onto an ink receptor surface without physical contact between the printer and the substrate. The printing device stores the printing data electronically and controls a mechanism for ejecting the drops image-wise. This can be performed in several different ways. In continuous ink jet printing, the drops are continuously generated and are charged electrostatically and deflected to be printed or to be recollected. In drop on demand (DOD) printing, drops are only ejected when they are used in imaging. The droplets can be formed by means of pressure created by a piezoelectric transducer or by thermal pushes via the formation of a bubble.

Ink compositions for ink jet include dye or pigment, water or solvent (not in UV and hot melt inks), polymeric binder, humectant and additives such as photoinitiator in radiation curable inks, preservatives, dispersing agents. Inks can be divided in different types. In water based inks, drying involves absorption and penetration into the substrate, followed by evaporation. In oil based types of inks, drying involves absorption and penetration. In solvent based inks, the drying involves mostly evaporation of the solvent. Hot melt inks are solid at room temperature, but ejected in molten state. Finally, the radiation curable inks dry by polymerization.

Systems based on water and solvents suffer from a number of drawbacks. Volatile organic compounds (VOC) must be evaporated. Their drying is slow, more rapid for solvent based inks than for water based ones. Their use is limited to porous substrates. Frequently, blocking of the printing head nozzles occurs due to drying of the ink. The viscosity changes due to evaporation in the head. Finally, the prints have poor chemical resistance.

Radiation curable inks do not exhibit these disadvantages, but other problems arise in these inks. The difficulty lays in the combination of a series of properties. Each property independently can be solved, but for the total set of properties, compromises have to be made.

One of these properties that the inks must present is a very low viscosity, in the range of 5 to 25 mPa.s, for example 15 mPa.s at printing temperature, in order to be jettable in small droplets of a volume in the picoliter range. To reach these low viscosity values, radiation curable inks must contain very high levels of reactive diluent. But these reactive diluents having low viscosity also have a low radiation curing reactivity and generally have a bad smell, which can be accompanied with irritation problems.

Another important problem is the pigment wetting properties of the reactive diluents. In contrast to inks based on dyes, which are soluble, pigments are solids and have to be dispersed in the ink. Pigmented inks offer better light fastness but lead to higher viscosity. If the pigment wetting properties of a diluent are good, the viscosity of the ink will be lower than inks based on poor pigment wetters, if the starting viscosity of the pure, unpigmented diluent is the same. Also, inks made with products having poor pigment wetting properties show a low stability in time, which results in the flocculation or the precipitation of the pigment. Also, good wetting properties of the products reduce the number of passes needed in the grinding process in a bead mill required to bring the particle size to a submicron level. This brings about a reduction in time and in labor consuming step. Finally, good wetting properties permit to increase the pigment load of the ink, which brings about a higher color strength or a decrease of the print thickness still keeping the same color strength. Better pigment wetting also results in a better transparency of the printed ink layer.

The same principles are valid for other liquid ink technologies, gravure and flexo(graphic) printing, although to a lesser extent. Indeed, in gravure printing the image and text are engraved in a metal roller in form of cells. These engraved cells must be filled by a liquid ink of about 100 mPa.s. The excess of ink is squeezed away by a metal doctor blade. The ink is then transferred on the substrate (paper, aluminum foil or polymer films) by capillarity.

Flexography printing is a process where the image, which is formed on a soft rubber plate, receives a liquid ink from a special fully engraved ceramic roller, called anilox. The viscosity of the inks must be in the range of from 400 to 1000mPa.s. The ink is then transferred on the substrate.

As can be seen from the viscosity used in these printing processes the pigment wetting-viscosity relationship is less critical but still very challenging. The viscosity range of the UV-inks range from approximately 20 mPa.s for ink jet over 100 mPa.s for gravure to 1000 mPa.s for flexographic printing.

Many publications have already been made on radiation curable ink compositions. For example, EP 0 540 203 discloses VOC free UV inkjet compositions containing up to 70 % monofunctional or difunctional acrylates. WO 97/31071 describes radiation curable inkjet composition comprising low viscous and low toxic alkoxylated oligomers in a range from 80 to 95 %. EP 0 997 507 is concerned by radiation curable inkjet ink compositions containing at least 30 % of an amine functionalised polyether acrylate for increased cure speed. WO 99/29787 discloses a radiation curable ink jet ink of low viscosity and comprising a colorant, a reactive liquid material formed of both monofunctional and polyfunctional material and 5 to 30% by weight of at least one oligomer.

The present invention offers a much better compromise of properties required for liquid inks, than what is actually available. A very good pigment wetting is obtained resulting in a combination of low viscosity, good flow and

good color strength. The formulated pigment paste is easier to grind and less energy and time are thus required to obtain sufficiently small particles. This results in a more economical grinding process. The stability of the ink is increased, which results in less settling of the pigment and less risk of clogging in the printing head. Furthermore the ink shows good reactivity and a low odor. These results are obtained trough the use of tricyclodecyl di(meth)acrylate and/or tricyclodecyl mono(meth)acrylate as a constituent of the liquid ink.

This is why the present invention is concerned by a radiation curable liquid ink composition which comprises tricyclodecyl di(meth)acrylate and/or tricyclodecyl mono(meth)acrylate and a pigment.

More particularly, the radiation curable ink composition comprises:

(a) 1-85% by weight of tricyclodecyl di(meth)acrylate and/or tricyclodecyl mono(meth)acrylate;
(b) 1-50% by weight of a pigment;
(c) 0-85% by weight of an acrylic and/or methacrylic derivative;
(d) 0-15% by weight of a dispersing agent;
(e) 0-10% by weight of additives,
(f) 0-15% by weight of photoinitiators

calculated on the total weight of the composition.

The tricyclodecyl di(meth)acrylate and/or mono(meth)acrylate referred to in this specification are in fact a mixture of isomers which may be represented by the formulas:

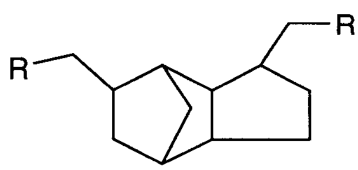

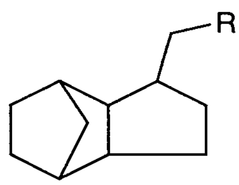

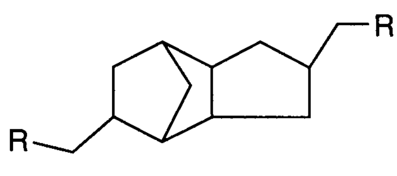

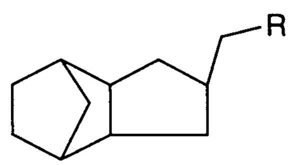

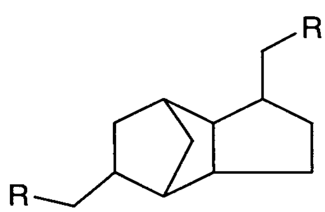

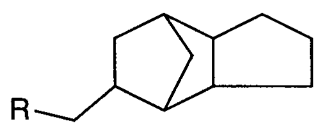

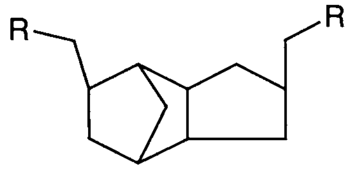

R = acrylate, methacrylate

Difunctional monomers are called 2-propenoic acid, [octahydro-4,7-methano-1H-indene-1,5(or 1,6 or 2,5 or 2,6)-diyl] bis(methylene) ester, as far as the acrylated monomers are concerned. The acrylated monofunctional monomers are called 2-propenoic acid, [octahydro-4,7-methano-1H-inden-1(or 2 or 5)-yl]methyl ester. The methacrylated corresponding compounds are called 2-methyl-2-propenoic acid, followed by the same name as the acrylated compounds. The acrylated mixture of tricyclodecyl dimethanol(s) is commercially available from Nippon Kayaku under the trademark Kayarad DCP-A and Kayarad R684, from Toagosei Chemical Industry under the trademark Aronix M203 and from Mitsubishi Chemicals under the trademark Yupimer UV-SA 1002. Tricyclodecyl diacrylate is in the further text often abbreviated as TCDA.

This diluent may be used at 1-85% by weight on the total weight of the ink, but it is preferably used at 10-50 % by weight.

The pigments used according to the invention are every pigments used in liquid inks. A list of such pigments can be found in the Colour Index. More particularly, those pigments may be cited such as Process Yellow 13 (Diarylide Yellow - Irgalite BAW of Ciba, Permanent GR of Clariant), Process Magenta Pigment 57 (Bona Calcium - Ilobona 4BY of Sun , Irgalite SMA of Ciba), Process Blue 15.3 (Copper Phthalocyanine - Irgalite GLO of Ciba, Hostaperm Blue B2G of Clariant), Process Black 7 (Oxidised Carbon Black - Special Black 250; Special Black 350 of Degussa), etc. The pigments are used at 1-50% by weight of the total weight of the composition, preferably at 1-40 % by weight.

The acrylic or methacrylic derivatives used according to the invention are those currently used in radiation curable compositions, especially in the ink field. These can be chosen among mono- di- and tri acrylates like isobornyl acrylate, phenoxyethyl acrylate, tetrahydrofurfuryl acrylate, dipropyleneglycol diacrylate, tripropyleneglycol diacrylate, hexanediol diacrylate, trimethylolpropane triacrylate or alkoxylated acrylates like propoxylated neopentylglycol diacrylate, oxyethylayed trimethylolpropane triacrylate, oxypropylated glycerol triacrylate. Oligomers may also be used, such as amino (meth)acrylates, polyester (meth)acrylates, urethane (meth)acrylates, epoxy (meth)acrylates, etc. These acrylic or methacrylic derivatives are used at 0-85% by weight of the total weight of the composition, preferably at 10-60 % by weight.

The photoinitiators usable in the ink compositions of the invention are well known in the art. They can be chosen from α-hydroxyketones, α-aminoketones, benzildimethylketals, acyl phosphines, benzophenone derivatives, thioxanthones and blends of these. They are used at 0 to 15% by weight. Photoactivators are chosen between amine derivatives. The photoinitiators need only be used if the compositions are cured by ultraviolet light. The compositions may also be cured by electron beams rays, and, in this case, no photoinitiator needs to be added to the composition.

The dispersing agents are classic, such as Disperbyk, EFKA, Solsperse, Ser-Ad etc.

The additives are those commonly used in inks, such as stabilizers, substrate wetting agents, anti-foam agents, adhesion promoters, etc.

Inks are generally made in 2 steps, the pigment dispersion step and the letdown step. In the 1$^{st}$ step, all the pigments are added in the pigment dispersing binders (oligomers and monomers). They are mixed and then dispersed on a triple roll or bead mill. A few passes are necessary to achieve a good dispersion. Pigments that are difficult to disperse require more number of passes. It is the same with the binders. Binders that are not good for pigment wetting also require additional passes. Once the pigment has achieved this fineness, the pigment paste is diluted with the letdown. The letdown has to be compatible with the binder used to disperse the pigments. The finished ink is then printed onto the substrate. The ink film is then cured under a UV lamp, for example at 120W/cm and 30 m/min. A few passes may be required to cure the ink if the binder is not reactive enough.

Examples.

Pigment wetting can be evaluated by different methods:

- For liquid inks a Newtonian rheology is required. Ideally, this means that the viscosity is independent of the shear rate. Pigment wetting is a major factor of influence on the rheology. Inks with bad wetting of the pigment are showing a marked shear thinning effect, whereby the viscosity is high at low shear rate and drops as the shear rate is increased. The rheology is measured with cone and plate type rheometers.
- Pigment wetting can also be evaluated by measuring the color density of the printed ink at constant film thickness. In this case the ink is printed using a lab applicator and the color density is measured with a densitometer, which spectrophotometrically compares the reflected light to the incident light.
- A third way to evaluate pigment wetting is to look at the transparency of the printed ink layer. In this test the clarity of a pattern below the printed ink is visually evaluated. The better the clarity, the better the pigment wetting.
- Finally the pigment wetting characteristics can also be followed by microscopic evaluation. Flocculation or aggregation of pigment particles can be seen under the microscope in diluted inks.

Practically, a series of monomers were evaluated with four pigments (Cyan, Magenta, Yellow and Black). The

properties tested were:

- Rheology and flow, which were measured on the liquid ink, with an apparatus Physica UDS200 (Paar-Physica), which is a plate and cone viscometer. The measurement geometry was of a diameter of 50 mm and an angle of 2° for the cone. The measurement was a flow curve in controlled shear rate ranging from D = 0,1 $sec^{-1}$ to D = 500 $sec^{-1}$ at 25 °C.
- Transparency and gloss were evaluated on the printed concentrated and diluted ink with the naked eye.
- The printed inks were also inspected by microscopy for pigment flocculation or aggregation.

Example 1. Preparation of the ink compositions

Inks are prepared according to above-mentioned process. In the pigment dispersion step, all the pigments are added in the pigment dispersing binders (oligomers and monomers). They are mixed manually with knife and then dispersed on a triple roll or bead mill.

The very first test to check the pigment dispersion is to look on the grinding gauge. The pigment paste is drawn down the slot with reducing depth. The depth of the slot usually varies from 25 to 1 micron (sensitivity being ±1 micron). Undispersed pigment particles in the form of agglomerates stick out of the film when the paste is drawn down giving scratches. Up to 3 scratches at 5 micron is acceptable, as it is practically not possible to disperse all the pigments (100%).

Once the pigment has achieved this fineness, the pigment paste is diluted with the letdown. The finished ink is then printed onto polypropylene films using the flexo proofer. This proofer gives an uniform film of around 1 micron thickness. The ink film is then cured under a UV lamp (120W/cm at 30 m/min). The compositions prepared are given in Table 1, where the figures are in weight %

Table 1

| | INK COMPOSITION | | | | PIGMENT PASTE | | | |
|---|---|---|---|---|---|---|---|---|
| | Cyan | Magenta | Yellow | Black | Cyan | Magenta | Yellow | Black |
| Monomer | 24 | 24.6 | 26.56 | 21.6 | 60 | 61.5 | 66.4 | 54 |
| Irgalite GLO | 14 | | | | 35 | | | |
| Ilobona 4BY203 | | 14 | | | | 35 | | |
| Irgalite BAW | | | 12 | | | | 30 | |
| Special Black 250 | | | | 16 | | | | 40 |
| Solsperse 24000 SC | 1.2 | 1 | 0.8 | 2 | 3 | 2.5 | 2 | 5 |
| Solsperse 22000 | 0.4 | | | | 1 | | | |
| Solsperse 5000 | | | | 0 | | | 0.6 | |
| Stabilizer | 0.4 | 0.4 | 0.4 | 0.4 | 1 | 1 | 1 | 1 |
| Photoinitiator | 9.5 | 9.5 | 9.5 | 9.5 | | | | |
| Ebecryl 40 * | 50 | 50 | 50 | 50 | | | | |
| Silicone oil PA 57 | 0.5 | 0.5 | 0.5 | 0.5 | | | | |

* Ebecryl 40 is the tradename of tetracrylated alkoxylated pentacrythritol sold by UCB, S.A.

Example 2

The cured ink on the film is then observed against a light source to detect any haziness or evaluate its transparency. The better the quality of dispersion, the better the transparency. The colour strength was looked at both visually with the naked eye in examples 2 and 3 and in the diluted inks of examples 5 and 7and with a densitometer "Spectro Eye" of GRETAG for the concentrated inks of examples 5 and 7. Sometimes the strength of the ink is very high and it is not easy to notice minor differences in transparency and density. The higher the colour strength, the higher the density. Hence the inks are further diluted with a diluting medium (usually a diacrylate monomer and some photoinitiator) in the ratio 10% ink to 90% diluent. The diluted ink is then applied with a laboratory coater manually. A film of about 10 microns is printed and cured again under the UV light. The film is once again observed for its transparency and colour strength. The flow of the liquid ink is rated as A if the flows freely or after a small shock. The purity is evaluated with a printed sample on plastic film. Flocculation, light scattering, bronzing or undertones were taken into account. The results are given in Table 2 and Table 2A.

In these tables, "trans" stands for "transparency".

In the following tables, the values of the properties are relative to TCDA for which the value of "0" has been given for that property. Values of minus are given when the property is worse than that of TCDA and values of plus are given when the property is better than that of TDCA.

Following abbreviations are used in the tables:

EO : elhoxylated
PO : propoxylated
PEG : polyethyleneglycol
NPG : neopentylglycol
TMP : trimethylolpropane
di-TMPTA : ditrimethylolpropane tetracylate
Ph : phenyl
DPGDA: dipropyleneglycol diacrylate

Table 2

PIGMENT WETTING OF LIQUID RESINS AND MONOMERS IN PRESENCE OF DISPERSING ADDITIVE

| COMPOSITIONS | YELLOW | | | | | | MAGENTA | | | | | |
|---|---|---|---|---|---|---|---|---|---|---|---|---|
| | Conc. Ink | | | 90% diluted ink | | | Conc. Ink | | | 90% diluted Ink | | |
| | trans | Flow | gloss | trans | strenght | purity | trans | Flow | Gloss | trans | strenght | purity |
| Isobornyl acrylate | -- | A | + | 0 | 0 | 0 | 0 | A | --- | 0 | - | -- |
| Octyl/decyl acrylate | - | A | 0 | - | 0 | 0 | 0 | A | -- | -------- | ----- | ------ |
| N-Vinyl pyrrolidone | ---- | A | -- | --- | --- | -- | -- | A | --- | ------- | ---- | ------ |
| 4-t-Butyl cyclohexanol acrylate | -- | A | + | 0 | 0 | 0 | --- | A | - | - | + | -- |
| Phenyl $(EO)_1$ acrylate | -- | A | + | - | 0 | 0 | 0 | A | 0 | - | + | -- |
| Phenyl $(EO)_2$ acrylate | -- | A | 0 | -- | + | 0 | 0 | A | 0 | --- | - | -- |
| Ethoxyethoxyethyl acrylate | --- | A | -- | 0 | - | 0 | 0 | A | 0 | --- | - | -- |
| Tricyclodecyl monoacrylate | - | A | 0 | O | 0 | - | 0 | A | - | + | + | + |
| Tricyclodecyl diacrylate | 0 | A | 0 | 0 | 0 | 0 | 0 | A | 0 | 0 | 0 | 0 |
| Dipropyleneglycol diacrylate | -- | A | -- | + | 0 | 0 | + | A | 0 | ---- | --- | ---- |
| Tripropyleneglycol diacrylate | -- | A | 0 | 0 | + | 0 | 0 | A | 0 | - | 0 | - |
| Hexanediol diacrylate | -- | A | + | - | -- | 0 | + | A | 0 | -- | 0 | - |
| Tetraethyleneglycol diacrylate | -- | A | -- | 0 | + | 0 | 0 | A | 0 | ---- | --- | ---- |
| PEG 600 diacrylate | --- | A | --- | - | 0 | 0 | --- | A | --- | ------ | --- | ----- |
| NPG $(OP)_2$ diacrylate | 0 | A | - | 0 | 0 | 0 | --- | A | ---- | --- | - | -- |
| Trimethylenepropane triacrylate | - | A | - | 0 | + | 0 | -- | A | --- | ---- | -- | --- |
| TMP $(EO)_3$ triacrylate | 0 | A | -- | 0 | 0 | 0 | + | A | 0 | ----- | --- | ---- |
| TMP $(EO)_{15}$ triacylate | -- | A | -- | - | - | 0 | --- | A | ----- | ------- | --- | ----- |
| Glycerol$(OP)_3$ triacrylate | -- | A | -- | + | 0 | 0 | + | A | -- | ----- | --- | ---- |
| Pentaerythritol triacrylate | - | A | -- | + | 0 | 0 | 0 | A | 0 | ----- | --- | ---- |
| di-TMPTA | 0 | A | - | 0 | -- | 0 | -- | A | --- | - | - | -- |

Table 2A

PIGMENT WETTING OF LIQUID RESINS AND MONOMERS IN PRESENCE OF DISPERSING ADDITIVE

| COMPOSITIONS | CYAN | | | | | | BLACK | | | | | |
|---|---|---|---|---|---|---|---|---|---|---|---|---|
| | Conc. Ink | | | 90% diluted ink | | | Conc. Ink | | | 90% diluted Ink | | |
| | Trans | Flow | gloss | Trans | Strenght | Purity | Trans | Flow | Gloss | Trans | strenght | Purity |
| Isobornyl acrylate | - | A | -- | -- | -- | 0 | --- | A | --- | - | 0 | 0 |
| Octyl/decyl acrylate | -- | A | ---- | ---- | 0 | 0 | -- | A | --- | -- | 0 | 0 |
| N-Vinyl pyrrolidone | - | A | 0 | -- | 0 | 0 | - | A | --- | --- | 0 | 0 |
| 4 tButyl cyclohexanol acrylate | 0 | A | 0 | --- | -- | 0 | - | A | -- | - | ++ | 0 |
| Phen(EO)$_1$ acrylate | -- | A | 0 | 0 | 0 | 0 | - | A | -- | + | ++ | 0 |
| Phen (EO)$_2$ acrylate | 0 | A | 0 | --- | --- | 0 | -- | A | -- | - | 0 | 0 |
| Ethoxyethoxyethyl acrylate | --- | A | ----- | -- | -- | 0 | -- | A | --- | -- | 0 | 0 |
| Tricyclodecyl monoacrylate | 0 | A | 0 | 0 | 0 | 0 | + | A | 0 | 0 | - | - |
| Tricyclodecyl diacrylate | 0 | A | 0 | 0 | 0 | 0 | 0 | A | 0 | 0 | 0 | 0 |
| Dipropyleneglycol diacrylate | 0 | A | 0 | -- | --- | -- | -- | A | -- | - | 0 | 0 |
| Tripropyleneglycol diacrylate | 0 | A | 0 | -- | ---- | -- | -- | A | -- | - | 0 | 0 |
| Hexanediol diacrylate | 0 | A | ---- | ---- | ---- | -- | -- | A | -- | - | + | 0 |
| Tetraethyleneglycol diacrylate | -- | A | -- | ---- | ----- | --- | -- | A | -- | ----- | -- | - |
| PEG 600 diacrylate | ---- | A | ------ | ------- | ------ | ----- | --- | A | ---- | ------ | ----- | ---- |
| NPG (OP)$_2$ diacrylate | - | A | -- | -- | -- | 0 | + | A | 0 | - | 0 | 0 |
| Trimethylenepropane triacrylate | 0 | A | --- | -- | - | 0 | -- | A | -- | - | 0 | 0 |
| TMP (EO)$_3$ triacrylate | 0 | A | ---- | -- | --- | -- | -- | A | -- | - | + | 0 |
| TMP (EO)$_{15}$ triacrylate | ---- | A | ----- | ------ | ----- | --- | -- | A | -- | --- | 0 | 0 |
| Glycerol(OP)$_3$ triacrylate | 0 | A | -- | -- | --- | -- | 0 | A | -- | - | 0 | 0 |
| Pentaerythritol triacrylate | - | A | -- | - | --- | 0 | - | A | -- | - | + | 0 |
| di-TMPTA | - | A | - | 0 | -- | 0 | -- | A | -- | - | 0 | 0 |

Binders that are not good for dispersion do not show a transparent film on printing. The film usually is hazy

with a lot of fine particles sticking to each other. In worst cases the pigment flocculate to each other and the printed film looks almost clear with hardly any colour.

Example 3

We also observed the printed films of the concentrated inks under the microscope under 25x magnification. It is possible to see the quality of dispersion. Bad dispersion in the form of agglomerates or flocculation of pigment particles can be seen. Based on all the above observations a rating is given for gloss, transparency and strength. Results are given in Table 3.

Table 3

| Microscope evaluation | | | | | | | | |
|---|---|---|---|---|---|---|---|---|
| | YELLOW | | MAGENTA | | CYAN | | BLACK | |
| | Concentrated ink | | Concentrated ink | | Concentrated ink | | Concentrated ink | |
| Description | Quality | Remarks | Quality | Remarks | Quality | Remarks | Quality | Remarks |
| Isobornyl acrylate | 0 | Almost as good | 0/+ | Same, no air | - | Small Agglomerates | - | -- |
| Octyl/decyl acrylate | - | Flocculation + Agglom | - | Slight Flocculation | - | Slight Flocculation | -- | Slight Flocculation |
| N-vinyl pyrrolidone | --- | Completely Floculated | - | Flocculation | 0/- | Very Slight Flocculation | - | Matt, small agglomer |
| 4 tButyl cyclohexanol acrylate | - | Slight Flocculation | - | Slight Flocculation | ++ | Better | - | Small agglo, air entrap |
| Phenyl(OE)$_1$ acrylate | - | Very slight Floculation | ++ | Better | ++ | Better, no air | - | Matt |
| Phenyl(OE)$_2$ acrylate | - | Flocculation | ++ | Better, no air | 0/+ | No air | - | Small agglomerates |
| Ethoxyethoxyethyl acrylate | - | Flocculation | + | No Air | - | Flocculation | -- | Slight Flocculation |
| Tricyclodecyl diacrylate | 0 | Almost as good | 0 | same, less air | 0 | Better, no air | 0 | As good |
| Dipropyleneglycol diacrylate | 0/- | Slight Flocculation | ++ | Better, no air | + | Better | -- | Small agglomerates |
| Tripropyleneglycol diacrylate | - | Flocculation + Agglom | + | No air | ++ | Better, no air | - | Small agglomerates |
| Hexanediol diacrylate | - | Flocculation | 0/+ | No air | 0/+ | No air | - | - |
| Tetraethyleneglycol diacrylate | - | Flocculation | 0 | No air, agllomerates | + | Better | - | Small agglomerates |
| PEG 600 DA | -- | Floculated | -- | Flocculation | -- | Flocculation | --- | Flocculation |
| NPG(OP)$_2$ DA | 0/- | Very slight Floculation | - | Small Agglomerates | + | Better | 0/- | Small agglomerates |
| Trimethylolpropane triacrylate | - | Flocculation + Agglom | 0/- | Small Agglomerates | - | Air Entrapped, agglomer | - | - |

| | | | | | | | | |
|---|---|---|---|---|---|---|---|---|
| TMP(EO)triacrylate | - | Slight Flocculation | ++ | Better | + | Better, no air | - | - |
| TMP(EO)$_{15}$ triacrylate | - | Slight Flocculation | - | Flocculation + Agglom | - | Flocculation | - | Small agglomerates |
| Glycerol(OP)$_3$ triacrylate | - | Slight Flocculation | ++ | Better, no air | 0/+ | No air | 0/- | Small agglomerates |
| Pentaerythritol triacrylate | - | Slight Flocculation | + | Better, no air | ++ | Better, no air | -- | - |
| di TMPTA | 0/- | Small agglomerates | 0 | Agglomerates | 0 | No air | - | - |

From Tables 2, 2A and 3, it can be seen that TCDA shows the best pigment wetting results from the monomers

when all colors are taken into consideration. Some monomers give better or equal pigment wetting for one color or exceptionally for two colors but never for the entire series. When other aspects like odor and reactivity are taken into consideration, TCDA comes out as the best choice for ink jet inks.

Example 4

This example descibes the rheology of the inks in terms of viscosity in function of shear rate. TCDA is giving the lowest shortness index (SI) and hence the best Newtonian behaviour, as required for liquid inks.

Table 4

| Rheology of the inks | | | |
|---|---|---|---|
| BINDERS | CYAN | | |
| | Visc. 2,5 (l/s) (mPa.s) | Visc. 100 (l/s) (mPa.s) | Shortness index |
| Phenyl(OE)$_1$ acrylate | 1000 | 325 | 3.08 |
| Phenyl(OE)$_2$ acrylate | 1410 | 358 | 3.94 |
| TCDA | 708 | 500 | 1.42 |
| DPGDA | 1190 | 267 | 4.46 |
| HDDA | 445 | 218 | 2.04 |
| Glycerol(OP)$_3$ triacrylate | 2200 | 444 | 4.95 |
| | MAGENTA | | |
| Phenyl(OE)$_1$ acrylate | 2707 | 328 | 8.25 |
| Phenyl(OE)$_2$ acrylate | 3335 | 387 | 8.62 |
| TCDA | 3601 | 701 | 5.14 |
| DPGDA | 3446 | 337 | 10.23 |
| HDDA | 2323 | 277 | 8.39 |
| Glycerol(OP)$_3$ triacrylate | 3369 | 572 | 5.89 |

Example 5

Tests were also done for TCDA, DPGDA and phenoxyethyl acrylate with different pigments (Cyan, Magenta, Yellow and Black) in order to prove the general applicability of the results, which are given in Table 5. The composition of the inks corresponds to the one given in example 1 with exception of the pigment. For cyan, Irgalite GLO was replaced by Hostaperm Blue B2G. For magenta Ilobona 4BY was replaced by Irgalite SMA. For yellow Irgalite BAW was replaced by Permanent GR. For black Special Black 250 was replaced by Special Black 350.

Table 5

| | YELLOW (Permanent GR) | | | | | | MAGENTA (Irgalite magenta SMA) | | | | | |
|---|---|---|---|---|---|---|---|---|---|---|---|---|
| | conc. ink | | | | 90% diluted ink | | conc. ink | | | | 90% diluted ink | |
| | Trans. | gloss | strength | S.I. | Trans. | strength | Trans. | Gloss | strength | S.I. | Trans. | strength |
| TCDA | 0 | 0 | 1,41 | 29.5 | 0 | 0 | 0 | 0 | 1,40 | 15.5 | 0 | 0 |
| DPGDA | 0 | 0 | 1,28 | 42.5 | 0 | - | 0 | 0 | 1,49 | 17.1 | | - |
| Phenyl(OE)1 acrylate | 0 | 0 | 1,35 | 39.6 | - | 0 | 0 | 0 | 1,40 | 23.2 | - | -- |
| | | | | | | | | | | | | |
| | BLACK (Special Black 350) | | | | | | CYAN (Hostapern Blue B2G) | | | | | |
| | conc. ink | | | | 90% diluted ink | | conc. ink | | | | 90% diluted ink | |
| | Trans. | gloss | strength | S.I. | Trans. | strength | Trans. | Gloss | strength | S.I. | Trans. | strength |
| TCDA | 0 | 0 | 2,13 | 4.5 | 0 | 0 | 0 | 0 | 2,09 | 3.0 | 0 | 0 |
| DPGDA | - | ---- | 2,10 | 8.4 | -- | - | -- | 0 | 2,03 | 10.7 | - | - |
| Phenyl(OE)1 acrylate | - | ---- | 2,18 | 10.5 | 0 | - | - | 0 | 2,18 | 4.8 | 0 | - |

S.I. = shortness index

Also with these four pigments, TCDA is the better pigment wetter as shown by the better gloss, transparency, color strength and the lower shortness index (more Newtonian character).

Example 6

The general applicability of the results can also be seen in the rheology of the inks based on TCDA, DPGDA and phenoxyethyl acrylate with different pigments. In all cases TCDA is showing the lowest shortness index (SI).

| | YELLOW (Permanent GR) | | | MAGENTA (Irgalite SMA) | | |
|---|---|---|---|---|---|---|
| Shear Rate / Visc. (mPa.s) | TCDA | DPGDA | $Ph(OE)_1$ acrylate | TCDA | DPGDA | $Ph(OE)_1$ acrylate |
| 2,72 $sec^{-1}$ | 18300 | 15300 | 16600 | 6990 | 4290 | 6410 |
| 13,00 $sec^{-1}$ | 4580 | 3590 | 3950 | 1640 | 953 | 1260 |
| 26,00 $sec^{-1}$ | 2640 | 1940 | 2170 | 1080 | 624 | 781 |
| 62,10 $sec^{-1}$ | 1430 | 961 | 1080 | 784 | 449 | 519 |
| 105,0 $sec^{-1}$ | 1040 | 669 | 758 | 658 | 373 | 422 |
| 250,0 $sec^{-1}$ | 673 | 398 | 456 | 491 | 276 | 304 |
| 500,0 $sec^{-1}$ | 504 | 285 | 324 | 402 | 223 | 243 |
| S.I. (2,5/250) | 29.5 | 42.5 | 39.6 | 15.5 | 17.1 | 23.2 |
| | BLACK (Special Black 350) | | | CYAN (Hostaperm Blue B2G) | | |
| Shear Rate / Visc. (mPa.s) | TCDA | DPGDA | $Ph(OE)_1$ acrylate | TCDA | DPGDA | $Ph(OE)_1$ acrylate |
| 2,72 $sec^{-1}$ | 1920 | 2140 | 2930 | 1030 | 2690 | 1180 |
| 13,00 $sec^{-1}$ | 1220 | 957 | 1150 | 671 | 1000 | 574 |
| 26,00 $sec^{-1}$ | 915 | 656 | 766 | 585 | 698 | 461 |
| 62,10 $sec^{-1}$ | 660 | 437 | 496 | 493 | 468 | 370 |
| 105,0 $sec^{-1}$ | 556 | 355 | 397 | 435 | 375 | 325 |
| 250,0 $sec^{-1}$ | 437 | 262 | 289 | 350 | 270 | 260 |
| 500,0 $sec^{-1}$ | 372.0 | 214.0 | 234.0 | 299 | 216 | 218 |
| S.I. (2,5/250) | 4.5 | 8.4 | 10.5 | 3.0 | 10.7 | 4.8 |

Example 7

A couple of inks were also made without dispersing additives. Again the four process colors (Cyan, Magenta, Yellow and Black) were used. TCDA was compared to DPGDA

| | YELLOW | | | | |
|---|---|---|---|---|---|
| | conc. ink | | | 90% diluted ink | |
| | Trans. | gloss | strength | Trans. | strength |
| TCDA | + | + | 1,39 | 0 | 0 |
| DPGDA | ++ | + | 1,33 | + | + |
| | CYAN | | | | |
| | conc. ink | | | 90% diluted ink | |
| | Trans. | gloss | strength | Trans. | strength |
| TCDA | 0 | 0 | 1,63 | 0 | 0 |
| DPGDA | -- | -- | 1,47 | --- | --- |

(continued)

| | MAGENTA | | | | |
|---|---|---|---|---|---|
| | conc. ink | | | 90% diluted ink | |
| | Trans.. | gloss | strength | Trans. | strength |
| TCDA | 0 | 0 | 1,27 | 0 | 0 |
| DPGDA | --- | --- | 1,17 | -- | -- |
| | BLACK | | | | |
| | conc. ink | | | 90% diluted ink | |
| | Trans. | gloss | strength | Trans. | strength |
| TCDA | 0 | 0 | 1,36 | 0 | 0 |
| DPGDA | ----- | --- | 1,08 | --- | ---- |

Conclusion: TCDA performed better than DPGDA in terms of transparency, gloss and color strength.

**Claims**

**1.** Radiation curable liquid ink composition containing tricyclodecyl di(meth)acrylate and/or tricyclodecyl mono(meth) acrylate and a pigment.

**2.** Radiation curable liquid ink composition **characterised in that** it comprises:

(a) 1-85% by weight of tricyclodecyl di(meth)acrylate and/or tricyclodecyl mono(meth)acrylate;
(b) 1-50% by weight of a pigment;
(c) 0-85% by weight of an acrylic and/or methacrylic derivative;
(d) 0-15% by weight of a photoinitiator;
(e) 0-15% by weight of a dispersing agent;
(f) 0-10% by weight of additives,

calculated on the total weight of the composition.

**3.** Radiation curable liquid ink according to any of claims 1 to 4, wherein the (meth)acrylic derivative (c) is a monomer or an oligomer, used alone or in admixture.

**4.** Radiation curable liquid ink according to any of claims 1 to 5 used as ink jet ink.

**5.** Radiation curable liquid ink according to any of claims 1 to 5 used in flexography printing.

**6.** Radiation curable liquid ink according to any of claims 1 to 5 used in gravure printing.

**7.** Radiation curable liquid ink according to any of claims 1 to 7, wherein the radiation curing is performed by one or more ultraviolet and/or electron beam sources.

European Patent Office

# EUROPEAN SEARCH REPORT

Application Number
EP 01 13 0747

| Category | Citation of document with indication, where appropriate, of relevant passages | Relevant to claim | CLASSIFICATION OF THE APPLICATION (Int.Cl.7) |
|---|---|---|---|
| X | DATABASE WPI<br>Section Ch, Week 199706<br>Derwent Publications Ltd., London, GB;<br>Class A12, AN 1997-061832<br>XP002198135<br>& JP 08 311130 A (TOSHIBA CHEM CORP),<br>26 November 1996 (1996-11-26)<br>* abstract *<br>--- | 1-3,7 | C09D11/10<br>C08F222/10 |
| X | DATABASE WPI<br>Section Ch, Week 198246<br>Derwent Publications Ltd., London, GB;<br>Class A97, AN 1982-98516E<br>XP002198136<br>& JP 57 164163 A (TOYO INK MFG CO),<br>8 October 1982 (1982-10-08)<br>* abstract *<br>--- | 1,2,7 | |
| D,A | EP 0 540 203 A (DOMINO PRINTING SCIENCES PLC) 5 May 1993 (1993-05-05)<br>* column 2, line 18 - line 25 *<br>* column 2, line 35 - line 42 *<br>* column 3, line 35 - column 4, line 14 *<br>* column 4, line 45 - line 52 *<br>----- | 1-7 | TECHNICAL FIELDS SEARCHED (Int.Cl.7)<br>C09D<br>C08F |

The present search report has been drawn up for all claims

| Place of search | Date of completion of the search | Examiner |
|---|---|---|
| THE HAGUE | 6 May 2002 | Matthijssen, J-J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT ON EUROPEAN PATENT APPLICATION NO.** EP 01 13 0747

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2002

| Patent document cited in search report | | Publication date | Patent family member(s) | | | Publication date |
|---|---|---|---|---|---|---|
| JP 8311130 | A | 26-11-1996 | NONE | | | |
| JP 57164163 | A | 08-10-1982 | JP | 1759621 | C | 20-05-1993 |
| | | | JP | 3053344 | B | 14-08-1991 |
| EP 0540203 | A | 05-05-1993 | DE | 69215835 | D1 | 23-01-1997 |
| | | | DE | 69215835 | T2 | 03-04-1997 |
| | | | EP | 0540203 | A1 | 05-05-1993 |
| | | | JP | 5214280 | A | 24-08-1993 |
| | | | US | 5275646 | A | 04-01-1994 |

EPO FORM P0459

For more details about this annex : see Official Journal of the European Patent Office, No. 12/82